**Europäisches Patentamt**

**European Patent Office**

**Office européen des brevets**

(19)

(11) Veröffentlichungsnummer : **0 016 901**
**B1**

(12) **EUROPÄISCHE PATENTSCHRIFT**

(45) Veröffentlichungstag der Patentschrift :
**24.11.82**

(21) Anmeldenummer : **80100100.9**

(22) Anmeldetag : **09.01.80**

(51) Int. Cl.³ : **E 21 D 21/00**, E 02 D  5/74,
F 16 B 13/04

(54) **Befestigungselement mit Ankerbolzen und Spreizkeil.**

(30) Priorität : 02.04.79 DE 2913090

(43) Veröffentlichungstag der Anmeldung :
**15.10.80 (Patentblatt 80/21)**

(45) Bekanntmachung des Hinweises auf die Patenterteilung : **24.11.82 Patentblatt 82/47**

(84) Benannte Vertragsstaaten :
**AT BE CH FR SE**

(56) Entgegenhaltungen :
DE A 1 056 643
DE A 1 954 414
DE A 2 316 163
FR A 487 237
FR A 2 175 866
FR E 84 470
US A 3 115 056

(73) Patentinhaber : **HILTI Aktiengesellschaft**
**FL-9494 Schaan (LI)**

(72) Erfinder : **Herb, Armin**
**Lärchenstrasse 9**
**D-8123 Peissenberg (DE)**

(74) Vertreter : **Berg, Wilhelm, Dr. et al**
**Dr. Berg, Dipl.-Ing. Stapf, Dipl.-Ing. Schwabe, Dr. Dr.**
**Sandmair Mauerkircherstrasse 45**
**D-8000 München 80 (DE)**

EP 0 016 901 B1

## Befestigungselement mit Ankerbolzen und Spreizkeil

Die Erfindung betrifft ein Befestigungselement mit Ankerbolzen und Spreizkeil, wobei der Ankerbolzen im rückwärtigen Bereich mit einem als Flansch ausgebildeten Angriffsteil zur Lastaufnahme versehen ist und eine sich gegen den vorderen Bereich des Ankerbolzens dessen Umfangskontur nähernde Keilfläche aufweist, entlang welcher der Spreizkeil zur Verspreizung des Elementes verschiebbar ist und sich Ankerbolzen und Spreizkeil in ungespreiztem Zustand zu einem kreisrunden Querschnitt ergänzen (DE-A-1 056 643).

Das Setzen von Befestigungselementen der eingangs gennanten Art erfolgt meist dadurch, daß zunächst das Befestigungselement so weit in das Bohrloch eingeführt wird, bis der Flansch des Ankerbolzens an dem zu befestigenden Teil zur Anlage kommt. In dieser Stellung ragt der Spreizkeil um ein bestimmtes Maß über das rückwärtige Ende des Ankerbolzens hinaus. Beim nachfolgenden Spreizvorgang wird der Spreizkeil so weit eingetrieben, bis sein rückwärtiges Ende mit demjenigen des Ankerbolzens bündig ist. Bei richtiger Dimensionierung der Aufnahmebohrung wird dann die für den entsprechenden Auszugswert erforderliche Verkeilung des Befestigungselementes im Bohrloch erreicht.

Infolge der Abnutzung des Bohrwerkzeuges kann es vorkommen, daß das Bohrloch im Durchmesser etwas zu klein wird. Die Folge davon ist, daß sich der Spreizkeil mit der normalen Eintreibkraft nicht so weit eintreiben läßt, daß sein rückwärtiges Ende mit demjenigen des Ankerbolzens bündig ist. Durch eine Vergrößerung der Eintreibkraft wird auch die Verspreizung des Befestigungselementes im Bohrloch größer. Dies kann dazu führen, daß der Spreizdruck an der Bohrlochwandung die Druckfestigkeit des Aufnahmematerials übersteigt. Wenn dies eintritt, so wird die Struktur des Aufnahmematerials zerstört. Der Haltewert des Befestigungselementes sinkt dann auf einen minimalen Wert ab.

Aus der DE-A-1 954 414 ist ein einstückiges spreizbares Befestigungselement mit zwei axial hintereinander angeordneten Keilabschnitten bekannt, die durch einen dünnen Steg verbunden sind. Dieser wird schon beim Eintreiben des Befestigungselementes durch Hammerschläge gebrochen, damit sich die beiden Keilabschnitte gegeneinander verkeilen können. Aus der DE-A-2 316 163 ist aus deren Fig. 7 bis 13 ein aus Ankerbolzen und Keil bestehendes Befestigungselement bekannt. Der Keil ist mit abscherbaren Armen in einer ringförmigen Ausnehmung befestigt, wobei die Arme bereits beim Einschieben des Ankerbolzens in das Bohrboch, also vor dem Verspreizen des Keiles durch eine den Ankerbolzen aus dem Bohrloch herausziehenden Kraft abscheren.

Gemeinsam ist diesen beiden bekannten Befestigungselementen, daß sie Sollbruchstellen aufweisen. Damit überhaupt eine Verspreizung zustande kommt, ist jeweils das Zerstören der Sollbruchstelle Voraussetzung. Eine Begrenzung des Spreizdruckes durch die Sollbruchstelle ist damit nicht möglich.

Der Erfindung liegt die Aufgabe zugrunde, ein Befestigungselement der genannten Art mit kontrollierbarer Spreizung zu schaffen, d.h. das Überspreizen des Befestigungselementes in einem engen Bohrloch zu vermeiden.

Gemäß der Erfindung wird dies dadurch erreicht, daß der Spreizkeil in seinem mittleren Bereich wenigstens einen als Sollbruchstelle dienenden, ein Nachrücken des rückwärtigen Teils des Spreizkeils ermöglichenden Trennsteg aufweist.

Die Durchtrennkraft der erfindungsgemässen Sollbruchstelle kann durch deren Dimensionierung gesteuert werden, wobei die Kraft auf die jeweilige Druckfestigkeit des Aufnahmematerials abgestimmt wird. Nach dem Durchtrennen der Sollbruchstelle kann der rückwärtige Teil des Spreizkeils so weit eingetrieben werden, bis sein rückwärtiges Ende mit demjenigen des Ankerbolzens bündig ist, ohne dass dabei der Spreizdruck im Bohrloch erhöht wird. Ein Ueberspreizen des Dübels und ein damit verbundenes Ueberschreiten der Druckfestigkeit des Aufnahmematerials ist durch die erfindungsgemässe Ausbildung somit nicht mehr möglich.

Für die Ausbildung einer Sollbruchstelle bestehen verschiedene Möglichkeiten. Als zweckmässig hat es sich erwiesen, dass der Trennsteg zwischen zwei axialer Richtung gegeneinander versetzten, von beiden Seiten ausgehenden, etwa bis zur Mitte reichenden Kerben gebildet ist. Solche seitliche Kerben sind ohne Spezialwerkzeuge oder -verfahren sehr einfach herstellbar. Durch die axiale Versetzung der Kerben gegeneinander entsteht ein Trennsteg, welcher beim Eintreiben des Spreizkeils auf Abscherung beansprucht wird. Bei einer Scherbeanspruchung bricht der Trennsteg bei Erreichen der erforderlichen Scherkraft praktisch ohne plastische Verformung. Die sich nun überlappenden Teile des Spreizkeils verklemmen sich im Bohrloch und verhindern ein Herausfallen des rückwärtigen Teils des Spreizkeils aus dem Bohrloch.

Eine weitere vorteilhafte Ausführung besteht darin, dass die Trennstege zwischen zwei auf gleicher Höhe von beiden Seiten ausgehenden Kerben und einer gegenüber diesen in axialer Richtung versetzten, in der Breite etwa dem Restquerschnitt zwischen den Kerben entsprechenden Durchgangsöffnung gebildet sind. Auch diese Trennstege werden beim Eintreiben des Spreizkeils auf Abscheren beansprucht. Durch die Verteilung auf zwei Sollbruchstellen wird der Einfluss von allfälligen Fabrikationstoleranzen verringert. Diese Ausbildung ermöglicht ausserdem eine Klemmverbindung zwischen dem vorderen Teil und dem rückwärtigen Teil des Spreizkeils unabhängig von der Bohrlochwandung. Dadurch wird verhindert, dass beispielsweise bei Deckenmontage der rückwärtige Teil des Spreizkeils herausfallen kann. Die Herstellung der Durchgangsöffnung sowie der seitlichen Kerben kann beispielsweise in einem Stanzvorgang erfolgen.

Die Lage der Kerben zur Bildung von Trennstegen kann rein vom Trennvorgang hergesehen beliebig gewählt werden. Für eine möglichst einfache Herstellung des Spreizkeiles ist es jedoch zweckmässig, wenn der Grund der Kerben im wesentlichen normal zur Keilfläche verläuft. Eine solche Anordnung ermöglicht die Herstellung der Kerben sowie einer allfälligen Durchgangsöffnung beispielsweise in einem einzigen Stanzvorgang.

Beim Betriebsverhalten des Befestigungselementes ist ein Nachspreizen unter Belastung erwünscht. Um dies zu erreichen ist es vorteilhaft, wenn der Grund der Kerben etwa parallel zur Keilfläche verläuft. Dadurch wird vermieden, dass sich der Spreizkeil im Bereich des Trennsteges am Ankerbolzen verklemmt und beim Belasten des Ankerbolzens zusammen mit diesem herausgezogen wird.

Die Erfindung soll nachstehend anhand der sie beispielsweise wiedergebenden Zeichnungen näher erläutert werden. Es zeigen :

Figur 1   Ein erfindungsgemässes Befestigungselement in perspektivischer Darstellung, vor dem Eintreiben des Spreizkeils ;

Figur 2   Die Sollbruchstelle des Befestigungselementes gemäss Fig. 1 vor dem Bruch ;

Figur 3   Die Sollbruchstelle des Befestigungselementes gemäss Fig. 1 nach dem Bruch ;

Figur 4   Eine weitere erfindungsgemässe Sollbruchstelle vor dem Bruch ;

Figur 5   Die Sollbruchstelle gemäss Fig. 4 nach dem Bruch ;

Figur 6   Ein weiteres erfindungsgemässes Befestigungselement, in perspektivischer Darstellung.

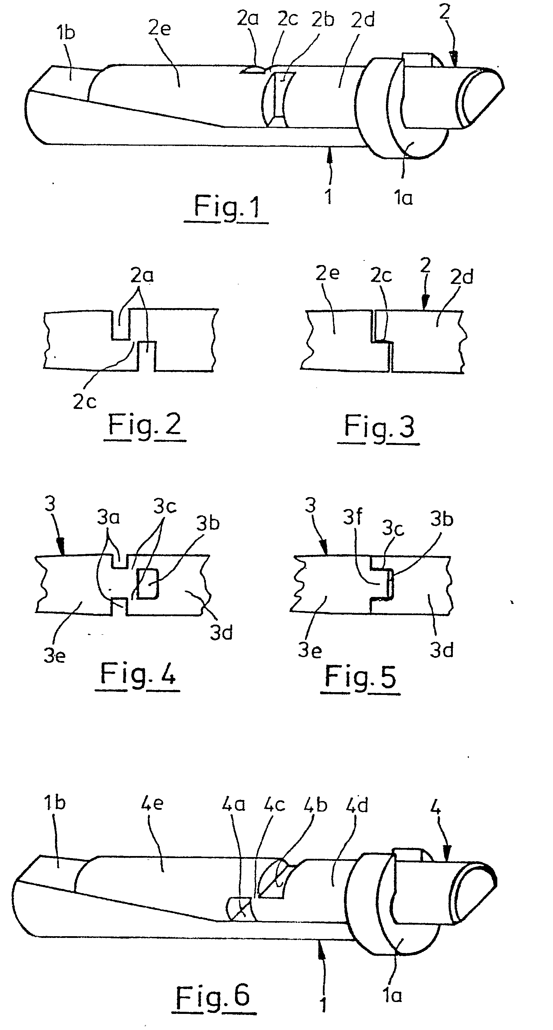

Das aus Fig. 1 ersichtliche, erfindungsgemässe Befestigungselement besteht aus einem insgesamt mit 1 bezeichneten Ankerbolzen und einem damit verbundenen, insgesamt mit 2 bezeichneten Spreizkeil. Der Ankerbolzen 1 wesit an seinem rückwärtigen Ende einen Flansch 1a als Angriffsteil zur Lastaufnahme auf. Der vordere Bereich des Ankerbolzens 1 ist als sich gegen das vordere Ende der Umfangskontur nähernde Keilfläche 1b ausgebildet. Der Spreizkeil 2 ist entsprechend gegen das vordere Ende verjüngt ausgebildet. Vor dem Einsetzen des Befestigungselementes ins Bohrloch ragt das rückwärtige Ende des Spreizkeils 2 über das rückwärtige Ende des Ankerbolzens 1 hinaus.

Beim Setzen des erfindungsgemässen Befestigungselementes wird dieses so weit ins Bohrloch eingeführt, bis der Flansch 1a des Ankerbolzens 1 an der Oberfläche des Aufnahmematerials, bzw. an dem zu befestigenden Teil zur Anlage kommt. Hierauf wird der Spreizkeil 2 so weit eingetrieben, bis sein rückwärtiges Ende mit demjenigen des Ankerbolzens 1 bündig ist. Um dabei ein Ueberspreizen des Befestigungselementes zu verhindern, weist der Spreizkeil 2 in seinem mittleren bereich zwei axialer Richtung gegeneinander versetzte, von beiden Seiten ausgehende Kerben 2a auf. Der Grund 2b der Kerben 2a verläuft im wesentlichen normal zur Keilfläche 1b. Zwischen den Kerben 2a bleibt ein dünner, als Sollbruchstelle dienender Trennsteg 2c bestehen. Wenn während des Setzvorganges der Eintreibwiderstand des Spreizkeils 2 einen bestimmten Wert übersteigt, so wird der Trennsteg 2c abgeschert, so dass der rückwärtige Teil 2d des Spreizkeils 2 gegenüber dem vorderen Teil 2e nachrücken kann. Auf diese Weise wird ein Ueberspreizen des Befestigungselementes in einem engen Bohrloch vermieden.

Die in Fig. 2 dargestellte Ansicht des Spreizkeils 2 gemäss Fig. 1 zeigt deutlich die beiden seitlich angeordneten Kerben 2a sowie den dazwischen verbleibenden Trennsteg 2c. Die Kerben 2a verlaufen etwa je bis zur Mitte des Querschnittes.

Die aus Fig. 3 ersichtliche Ansicht zeigt den Spreizkeil 2 nach dem Abscheren des Trennsteges 2c. Das Durchtrennen des Trennsteges 2c ermöglicht ein Nachrücken des rückwärtigen Teils 2d gegenüber dem vorderen Teil 2e des Spreizkeils 2.

Fig. 4 zeigt eine weitere Ausführung eines insgesamt mit 3 bezeichneten Spreizkeils. Dieser weist ebenfalls seitliche Kerben 3a auf. Im Unterschied zu der in den Figuren 1-3 gezeigten Ausführung sind die Kerben 3a jedoch auf gleicher Höhe angeordnet und ragen nicht bis zur Mitte des Querschnittes des Spreizkeils 3. Der Spreizkeil 3 weist zusätzlich eine gegenüber den Kerben 3a in axialer Richtung versetzte, in der Breite etwa dem Restquerschnitt zwischen den Kerben 3a entsprechende Durchgangsöffnung 3b auf. Zwischen den Kerben 3a und der Durchgangsöffnung 3b entstehen zwei Trennstege 3c, welche ebenfalls als Sollbruchstelle ausgelegt sind. Wenn beim Setzvorgang die Festigkeit der Trennstege 3c überschritten wird, so werden diese abgeschert und ermöglichen ein Nachrücken des rückwärtigen Teils 3d des Spreizkeils 3 gegenüber dem vorderen Teil 3e.

In der aus Fig. 5 ersichtlichen Darstellung sind die Trennstege 3c abgeschert und der rückwärtige Teil 3d des Spreizkeils 3 gegenüber dem vorderen Teil 3e des Spreizkeils 3 in axialer Richtung nachgerückt. Bei dieser Ausbildung wird ein zwischen den Kerben 3a verbleibender Zapfen 3f in der Durchgangsöffnung 3b eingeklemmt. Dadurch ergibt sich eine Verbindung des rückwärtigen Teils 3d mit dem vorderen Teil 3e des Spreizkeils. Ein Herausfallen des rückwärtigen Teils 3d, beispielsweise bei einer Deckenmontage, wird dadurch vermieden.

Das in Fig. 6 dargestellte Befestigungselement besteht ebenfalls aus dem Ankerbolzen 1 mit rückwärtigem Flansch 1a und einem damit verbundenen, insgesamt mit 4 bezeichneten Spreizkeil. Der Spreizkeil 4 weist in seinem mittleren Bereich zwei in axialer Richtung gegeneinander versetzte Kerben 4a auf. Der Grund 4b der Kerben 4a verläuft etwa parallele zur Keilfläche 1b des Ankerbolzens 1. Zwischen den Kerben 4a, wird ein Trennsteg 4c gebildet. Wenn beim Setzvorgang der Befestigungselemente der Eintreibwiderstand des Spreizkeils 4 einen bestimmten Wert übersteigt, so wird der Trennsteg 4c abgeschert und dadurch ein Nachrücken des rückwärtigen Teils 4d des Spreizkeils 4 gegenüber dem vorderen Teil 4e ermöglicht. Durch die Anordnung des Grundes 4b der Kerben 4a etwa parallel zur Keilfläche 1b wird vermieden, dass im Bereich des Trennsteges 4c der Spreizkeil 4 mit dem Ankerbolzen 1 verklemmt und dadurch das Nachspreizen des Befestigungselementes behindert wird.

## Ansprüche

1. Befestigungselement mit Ankerbolzen (1) und Spreizkeil (2, 3, 4), wobei der Ankerbolzen im rückwärtigen Bereich mit einem als Flansch (1a) ausgebildeten Angriffsteil zur Lastaufnahme versehen ist und eine sich gegen den vorderen Bereich des Ankerbolzens, dessen Umfangskontur nähernde Keilfläche (1b) aufweist, entlang welcher der Spreizkeil zur Verspreizung des Elementes verschiebbar ist und sich Ankerbolzen und Spreizkeil in ungespreiztem Zustand zu einem kreisrunden Querschnitt ergänzen, dadurch gekennzeichnet, daß der Spreizkeil (2, 3, 4) in seinem mittleren Bereich wenigstens einen als Sollbruchstelle dienenden, ein Nachrücken des rückwärtigen Teils (2d, 3d, 4d) des Spreizkeils ermöglichenden Trennsteg (2c, 3c, 4c) aufweist.

2. Befestigungselement nach Anspruch 1, dadurch gekennzeichnet, daß der Trennsteg (2c, 4c) zwischen zwei in axialer Richtung gegeneinander versetzten, von beiden Seiten ausgehenden, etwa bis zur Mitte reichenden Kerben (2a, 4a) gebildet ist.

3. Befestigungselement nach Anspruch 1, dadurch gekennzeichnet, daß die Trennstege (3c) zwischen zwei auf gleicher Höhe von beiden Seiten ausgehenden Kerben (3a) und einer gegenüber diesen in axialer Richtung versetzten, in der Breite etwa dem Restquerschnitt zwischen den Kerben (3a) entsprechenden Durchgangsöffnung (3b) gebildet sind.

4. Befestigungselement nach Anspruch 1 oder 2, dadurch gekennzeichnet, daß der Grund (2b) der Kerben (2a) im wesentlichen normal zur Keilfläche (1b) verläuft.

5. Befestigungselement nach Anspruch 1 oder 2, dadurch gekennzeichnet, daß der Grund (4b) der Kerben (4a) etwa parallel zur Keilfäche (1b) verläuft.

## Claims

1. A fixing element with an anchor bolt (1) and a spacing wedge (2, 3, 4), the anchor bolt being provided in its rearward region, for load accommodation, with an engagement member formed as a flange (1a) and comprising a slanted surface (1b) approaching the circumferential contour of the anchor bolt in the direction of the frontward region of the anchor bolt, along said slanted surface the spacing wedge being displaceable for expanding the element and the anchor bolt and the spacing wedge supplementing in the unexpanded condition each other to form a circular cross section, characterized in that the spacing wedge (2, 3, 4) comprises in its mid region at least one separation web (2c, 3c, 4c) serving as rated break point and allowing an advancement of the rearward part (2d, 3d, 4d) of the spacing wedge.

2. A fixing element according to claim 1, characterized in that the separation web (2c, 4c) is formed between two notches (2a, 4a) staggered with respect to each other in the axial direction and starting at both sides and extending to approximately the center.

3. A fixing element according to claim 1, characterized in that the separation webs (3c) are formed between two notches (3a) starting at the same level at both sides and a through-hole axially offset with respect to these notches and corresponding in its width to about the remaining cross-sectional diameter between the notches (3a).

4. A fixing element according to claim 1 or 2, characterized in that the bottom (2b) of the notches (2a) extends essentially normally towards the slanted surface (1b).

5. A fixing element according to claim 1 or 2, characterized in that the bottom (4b) of the notches (4a) extends essentially parallelly towards the slanted surface (1b).

## Revendications

1. Elément de fixation à boulon d'ancrage (1) et coin d'écartement (2, 3, 4), du type dans lequel le boulon d'ancrage est pourvu, dans la partie arrière, d'une partie d'attaque réalisée sous la forme d'une collerette (1a) et servant à recevoir la charge, et d'une surface cunéiforme (1b) s'approchant du contour dudit boulon dans la partie antérieure de ce dernier et le long de laquelle le coin d'écartement est déplaçable pour l'expansion de l'élément de fixation et le boulon d'ancrage et le coin d'expansion se complètent, à l'état pas écarté, pour présenter une section transversale circulaire, caractérisé par le fait que le coin d'écartement (2, 3, 4) comporte dans sa partie médiane au moins une barrette de séparation (2c, 3c, 4c) servant de point destiné à la rupture et autorisant l'avance de la partie postérieure (2d, 3d, 4d) du coin d'écartement.

2. Elément de fixation selon la revendication 1, caractérisé par le fait que la barrette de séparation (2c, 4c) est formée à l'aide de deux encoches (2a, 4a) décalées axialement entre elles et s'étendant à partir des deux côtés jusqu'à environ le milieu.

3. Elément de fixation selon la revendication 1, caractérisé par le fait que les barrettes de séparation (3c) sont formées par deux encoches (3a) prévues à un même niveau et s'étendant à partir des deux côtés, et par une ouverture de passage (3b) décalée axialement par rapport à ces encoches et ayant une largeur qui correspond à la section transversale résiduelle entre ces dernières (3a).

4. Elément de fixation selon la revendication 1 ou 2, caractérisé par le fait que le fond (2b) des encoches (2a) s'étend essentiellement en direction normale par rapport à la surface cunéiforme (1b).

5. Elément de fixation selon la revendication 1 ou 2, caractérisé par le fait que le fond (4b) des encoches (4a) est sensiblement parallèle à la surface cunéiforme (1b).

Fig. 1

Fig. 2

Fig. 3

Fig. 4

Fig. 5

Fig. 6